# EUROPEAN PATENT SPECIFICATION

(11) **EP 4 101 587 B1**
(45) Date of publication and mention of the grant of the patent: **28.10.2026**
(21) Application number: 21178600.9
(22) Date of filing: 09.06.2021
(51) Int. Cl.: B24B 13/005, B24B 49/12

(54) **POSITIONING SYSTEM AND METHOD FOR HANDLING A SPECTACLE LENS**
POSITIONIERUNGSSYSTEM UND VERFAHREN ZUR HANDHABUNG EINES BRILLENGLASES
SYSTÈME ET PROCÉDÉ DE POSITIONNEMENT POUR MANIPULER UN VERRE DE LUNETTES

(43) Date of publication of application: 14.12.2022
(73) Proprietor: Carl Zeiss Vision International GmbH, 73430 Aalen (DE)
(72) Inventor: Meschenmoser, Ralf, 73457 Essingen (DE); Groll, Christoph, 73450 Neresheim (DE); Dangelmaier, Andreas, 73434 Aalen (DE); Pauker, Friedrich, 86420 Diedorf (DE)
(74) Representative: Carl Zeiss AG - Patentabteilung

(56) References cited:
- CN-C- 100 566 933
- US-A1- 2017 239 774
- US-A1- 2017 348 823

## Description

The invention relates to a positioning system for handling and aligning a spectacle lens according to the generic term of claim 1. Furthermore, the invention relates to a method for handling a spectacle lens.

In the context of the invention, a spectacle lens is understood to mean in particular a finished lens, i.e. according to DIN EN ISO 13666:2019-12, section 3.8.7, a lens of which both sides have their final optical surface, and which might already be edged. An edged lens is according to DIN EN ISO 13666:2019-12, section 3.8.9, a finished lens edged to the final size and shape.

When processing spectacle lenses, they are usually transported or fed to the individual process steps pairwise in so-called "job trays". In these job trays, the spectacle lenses are arranged horizontally with the front surface facing upwards, which is according to DIN EN ISO 13666:2019-12, section 3.2.13, the surface of the lens intended to be fitted away from the eye which, when used as intended. While the front surface often has a convex shape, the back surface, which is according to DIN EN ISO 13666:2019-12, section 3.2.14, the surface of the lens intended to be fitted nearer to the eye side, is often unevenly formed and shows quite often a clear deviation of the axis of rotation from the center of gravity of the spectacle lens, especially in prismatic spectacle lenses.

Due to the different outer contours, which can for example have a round shape - with different diameters - but also elliptical shapes, and the partly complexly shaped rear side, which can be prismatic, cylindrical or also have a free form, the spectacle lenses lie on stepped webs in the job trays. On the one hand, this prevents slipping during transport and, on the other hand, ensures that the spectacle lenses can be prepared for removal from the job tray by automatic systems such as vacuum suckers or fingers. It is known from the prior art that the spectacle lens is placed with the front surface facing upwards on a horizontal platform where it is subsequently pre-centered. This pre-centering is necessary to pre-position the spectacle lens for the machine-internal processing clamping device. This pre-positioning is usually realized either by the shape of the platform (pot-shaped and vibrating), by closing, radially arranged fingers, or by a combination of these mechanisms.

However, when the spectacle lens is placed on the complexly shaped rear side, it has proven problematic that the front side to be machined ultimately lies undefined in space. It has also proved disadvantageous that the spectacle lens wobbles on the back surface because of the unshaped cylinder edge. For certain machining processes, such as laser engraving, in which a logo, for example, is to be engraved on the front surface of the spectacle lens, it is absolutely necessary to know at least the height of the position to be machined in order, for example, to be able to adjust the laser focus and to ensure the desired quality of the laser engraving. For this purpose, a tactile height sensing is usually carried out at the processing position, but this is very time-consuming.

In addition, it is problematic in laser engraving if the area of the spectacle lens to be engraved is not oriented perpendicular to the laser beam. When the marking to be engraved is projected onto a surface at an angle to the laser beam, distortion of the marking occurs and the area in which the laser must be focused, i.e. the so-called depth-of-field area, is enlarged, which is problematic. This is especially problematic for spectacle lenses with small front radii and for spectacle lenses with a high prismatic effect. This surface that is at an angle to the laser beam occurs in particular when the spectacle lens to be engraved rests with its back surface on a horizontal platform during the engraving process or is pre-aligned on the horizontal platform and then transferred to a machine-internal clamping device without knowing the exact position and orientation of the spectacle lens.

Positioning systems of the type mentioned at the beginning, i.e. according to the generic term of claim 1, are already known from the prior art. For example, EP 0 855 248 A1 shows such a positioning system, in which spectacle lenses are mounted on supports and are brought into the area of a handling device by a transport device on guide rails. This handling device then picks up the spectacle lenses with a suction device. However, even with the positioning system known from EP 0 855 248 A1, it has proved disadvantageous that the suction device cannot pick up the spectacle lenses positioned on the support of the transfer device in a defined manner. Thus, the position and orientation - i.e. their pose - of the spectacle lenses picked up by the vacuum suction cup is not known. In EP 0 855 248 A1, this would only be possible if both the front surface and the back surface of the spectacle lenses to be picked up were really flat. However, particularly in the case of spectacle lenses with a convex front surface, or if the spectacle lenses have, for example, a prismatic rear surface, there is the problem that, after being picked up by the suction device, the position and/or alignment of the spectacle lens are in a non-defined state and the alignment and position of the spectacle lens must first be detected and determined by a tactile height sensing in a time-consuming manner before downstream process steps, such as laser engraving, can be carried out.

The US 2017/0348823 A1 shows an additional handling system for spectacle lenses in which the respective spectacle lens can be lifted from a support by applying vacuum on the lens by means of a dome-shaped suction element. This suction element will be pressed against an orienting element, when the vacuum is applied. However, the handling device of the US 2017/0348823 A1, which might be considered closest prior art, exhibits the drawback that the due to the flexibility of the suction element an alignment of the spectacle lens will be negatively affected.

US 2017 /0239774 Al shows a device for blocking workpieces, which comprises an aligning station that includes a workpiece support for aligning a workpiece and a blocking station. It further comprises a workpiece carriage that is used to transport the workpiece from the aligning station to the blocking station to position the workpiece in a defined manner in the blocking station. The workpiece carriage uses a suction device to lift up the spectacle lens. Similarly, also US 2008/0051012 Al shows a suction device, for lifting a spectacle lens from a support.

It is therefore an object of the present invention to provide a positioning system that facilitates a defined alignment of a spectacle lens. Furthermore, it is also an object of the invention to provide an improved method for handling a spectacle lens.

According to the invention, the object relating to the positioning system is solved in a positioning system according to claim 1.

This ensures that the spectacle lenses, can be safely picked up by the handling device's vacuum suction unit and, in particular, are in a defined position after being picked up. When lifted up, the spectacle lens is brought into contact with the reference contour, which ultimately forms a stop for the spectacle lens and provides for a specific point of reference. Due to the reference contour at which the spectacle lens comes into contact, there is no need to tactilely scan the surface. If the shape and the dimensions of the reference contour and the radius of the front surface of the spectacle lens are known, it is possible to trace back to the current pose - i.e. the actual pose - of the spectacle lens. In the context of the invention, the expression "pose" refers to the position and orientation of the spectacle lenses in the room. This ultimately enables a defined alignment and positioning of the spectacle lenses. Thus, it is also possible with the handling device to provide comparatively extreme basic curves with laser engravings, for example to engrave the logo of a manufacturer on a predefined spot of the spectacle lens. The reference contour is preferably formed in the region of the distal end of the vacuum suction unit. In the context of the invention, the lifting of the spectacle lens by the vacuum suction unit is carried out by applying negative pressure to the spectacle lens by means of a vacuum pump for example, whereby "negative pressure" is characterized by a lower pressure compared to the ambient pressure and is preferably generated in a known way by means of a vacuum pump.

In the context of the invention, it has also been shown to be advantageous if the vacuum suction unit protrudes axially above the reference contour in relation to a longitudinal axis of the vacuum suction unit. This ensures that the spectacle lens is first contacted by the vacuum suction unit, which ensures that a vacuum can form on the spectacle lens, which is sufficient to absorb the spectacle lens from the support of the transfer device. In this context, it has also proved to be advantageous if the vacuum suction unit has at least one bellows section. The bellows section ensures in a simple way that a lens taken up by the vacuum suction unit is adjusted against and brought into contact with the fixed reference contour. If the vacuum suction unit contacts the spectacle lens and the pressure drops by suctioning the air, the vacuum suction unit compresses the at least one bellow section and pulls the spectacle lens against the fixed reference contour. However, the invention also provides for the reference contour to be adjusted in relation to the vacuum suction unit in order to achieve contact of the spectacle lens with the reference contour.

In order to reduce the risk of damage to the spectacle lens during the lifting process, it has also proven to be useful if the contact area of the reference contour is rounded. In the context of the invention, the expression "contact area" is understood to be the area of the reference contour that comes into physical contact with the spectacle lenses. The rounding also ensures that the contact area of the reference contour with the spectacle lenses forms a line contact through which a defined contact is reached between the reference contour and the spectacle lenses, further supporting the defined alignment of the spectacle lenses.

In order to increase the holding force of the handling device, it has also proved to be advantageous to have an air-conducting connection between the vacuum suction unit and an intermediate region limited by the reference contour. By contacting a spectacle lens with the reference contour, a sealing is achieved which, together with the air-conducting connection, makes it possible to create a vacuum on the spectacle lens also in the intermediate region between the vacuum suction unit and the reference contour, thereby improving the overall holding force of the positioning system. In addition, a pressure gauge can be placed in the intermediate region between the vacuum suction unit and the reference contour, which can measure the pressure in said intermediate region. The result of which can then be used to determine the quality of the vacuum in the vacuum suction unit and thus also monitor the vacuum there. The air-conductive connection can be formed, for example, by one or more openings in the vacuum suction unit that lead to the intermediate region.

A satisfying and complete contact of a spectacle lens by the reference contour is achieved by a circular shape of the reference contour. This ensures that the line contact between a spectacle lens and the reference contour is not interrupted along the reference contour, which is not necessarily possible with a polygon-shaped reference contour, for example. In addition, the vacuum suction unit is mainly coaxial to the reference contour. The coaxiality allows the vacuum suction unit to be located in the center of the - usually convex-shaped - front surface of the spectacle lens.

It has also proven advantageous if a device is provided for pose detection of a spectacle lens picked up by the handling device. This pose detection device can, for example, comprise a camera and ultimately enables an actual pose of the spectacle lens to be detected, which is advantageous, for example, when laser engraving is applied. In this context, it is also envisaged that the permanent engravings present on or in the spectacle lens are optically detected by the pose detection device and their position is evaluated in relation to the coordinate system of the reference contour in order to determine the actual pose of the spectacle lens. Since the radius of the spherical front surface of the spectacle lens and also the dimensions of the reference contour are known, it is possible to determine the actual pose of the spectacle lens and thus ultimately, even without tactile height sensing, to orient the area of the spectacle lens at which the laser engraving is to be applied in such a way that the center of the engraving is orthogonal to the laser beam and at the focal point.

As mentioned before, especially for determining the actual pose of the spectacle lenses, it has proven to be advantageous to know the dimensions of the reference contour. This facilitates the positioning and alignment of the spectacle lenses, since otherwise, for example in the case of laser engraving, the focus of the laser would not be on the front surface of the spectacle lens, which would adversely affect the quality of the laser engraving. Due to the convex shaped front surface of the spectacle lens, a spectacle lens will be able to plunge into the intermediate region of the handling device to different depths with different diameters of the handling device, so that the position of the spectacle lens would change. This shows that, for example, in order to be able to determine the distance of a point on the surface of a spectacle lens to a laser, the dimensions of the reference contour must be known. In this context, it has proven useful if the diameter of the reference contour is smaller than 35 mm, preferably smaller than 30 mm, particularly preferably smaller than 25 mm and further preferably larger than 15 mm, preferably larger than 17.5 mm and particularly preferably larger than 20 mm and especially preferably 21 mm. In particular, if the diameter of the reference contour is chosen to be too small, there is the problem that the additional holding force is reduced. If, on the other hand, the diameter of the reference contour is chosen to be too large, then there is the problem that the reference contour could cover the permanent engravings located on or in a spectacle lens, making it difficult to detect the actual pose of the spectacle lens. In this case, the spectacle lens may have to be put down on the support and picked up again.

It has also proved to be particularly advantageous if at least one drive is provided for the aligning and positioning the spectacle lens and/or the reference contour. Here it has also proven to be advantageous if the reference contour is mounted rotatably about an axis of rotation, is pivotable about a pivot axis and/or is axially adjustable. Here, a controller can preferably be provided to transfer the pose of the spectacle lens from the actual pose to a preferably predeterminable target pose. This transfer by means of rotation about the axis of rotation, pivoting about the pivot axis and/or axial adjustment is particularly preferably carried out automatically by the at least one drive. It has proved particularly useful if several drives are provided, namely particularly preferably exactly three drives. For control reasons, it has also been shown to be favorable if the pivot axis is oriented perpendicular to the axis of rotation. In particular, the axial adjustment of the reference contour can also be used to contact and pick up a spectacle lens located on the support of the transfer device.

It has also been shown to be favorable if the support of the transfer device is mounted by a cardanic bearing. Particularly in the case of spectacle lenses whose back surface has a high prismatic proportion, the cardanic mounting ensures that the front surface of the spectacle lens is nevertheless aligned essentially horizontally. If such spectacle lenses were placed on a horizontal surface, their front surfaces would be skewed in space. There would then be the problem that the front surface facing the vacuum suction unit could only be gripped with difficulty by the vacuum suction unit. In addition, the cardanic bearing ensures that the spectacle lens can move when it makes contact with the reference contour until it is completely in contact with the reference contour. This creates a rolling movement between the front surface of the spectacle lens and the reference contour. Hence, this reduces the risk of the reference contour slipping over the front surface of the spectacle lens and possibly scratching it.

It has also proven useful if the support is designed as an elastic membrane. This ensures that, in the case of a spectacle lens that is not completely horizontally aligned despite the cardan bearing, the reference contour comes into contact with the spectacle lens, since the spectacle lens can dip into the elastic membrane. As soon as the reference contour touches the spectacle lens, the spectacle lens - supported by the cardanic bearing as well as by the elastic membrane - is thus oriented in such a way that the preferably rounded contact area of the reference contour is completely in contact with the spherical front surface of the spectacle lens.

Within the scope of the invention, it is preferred that the transfer device comprises a frame on which the support is mounted by means of the cardanic bearing.

It has also proven to be beneficial if a centering circle and/or a catching circle is assigned to the support. This ensures in a simple manner that the spectacle lens can be placed and picked up centered on the support.

The object relating to the method is solved according to the invention by a method for handling a spectacle lens with a positioning system according to claim 13.

The placing of the spectacle lens on the support of the transfer device can preferably be automated, for example by a gripper or suction device removing the spectacle lens from a transport container and positioning it on the support of the transfer device. Advantageously, the spectacle lens can then be centered, which is facilitated, for example, by a centering circle and/or a catching circle which is provided, for example printed, on the support. The feeding of the spectacle lens to the handling device can be automated, too. When the spectacle lens is picked up from the support by the vacuum suction unit, the spectacle lens is contacted by the reference contour, according to the invention, which ensures that the spectacle lens is in a defined position.

It has also been shown to be particularly advantageous if the following steps are also provided:
- detection of an actual pose of the spectacle lens,
- matching the actual pose with a target pose, and
- aligning and positioning the spectacle lens in such a way that the actual pose substantially corresponds to the target pose.

The detection of the actual pose of the spectacle lens is preferably carried out by taking into account the dimensions of the reference contour. At the same time, the permanent engravings formed on or in the spectacle lens are advantageously detected by a pose detection device. From the position of these permanent engravings, the knowledge of the radius of the convex front surface of the spectacle lens and the diameter of the reference contour, the actual pose can be determined or calculated. If the actual pose is known, the deviation between the two poses can be determined by comparison with the target pose and then, in a final sub-step, the spectacle lens can be aligned and, if necessary, positioned in such a way that the actual pose and the target pose essentially match. These further steps ensure that the position and alignment of the spectacle lens can be adjusted in such a way that further processing of the spectacle lens is possible, for example by laser engraving. Hence the target pose represents the orientation and position of the spectacle lens, in which the laser is focused on the area to be laser engraved and said area is essentially perpendicular to the laser beam itself.

Further features, properties and advantages of the present invention will become apparent from the following description of exemplary embodiments with reference to the accompanying figures.
- Figure 1: a perspective view of a positioning system,
- Figure 2: a cut-out detailed view of a part of a positioning system handling device,
- Figure 3: a detailed view of a transfer device of the positioning system,
- Figure 4: a detailed view of a spectacle lenses inserted in the handling device,
- Figure 5: a top view of a spectacle lenses,
- Figure 6: a spectacle lens positioned in the handling device according to the invention during laser engraving,
- Figure 7: a spectacle lens during laser engraving according to the state of the art, and
- Figure 8: a flowchart of a method for handling a spectacle lens.

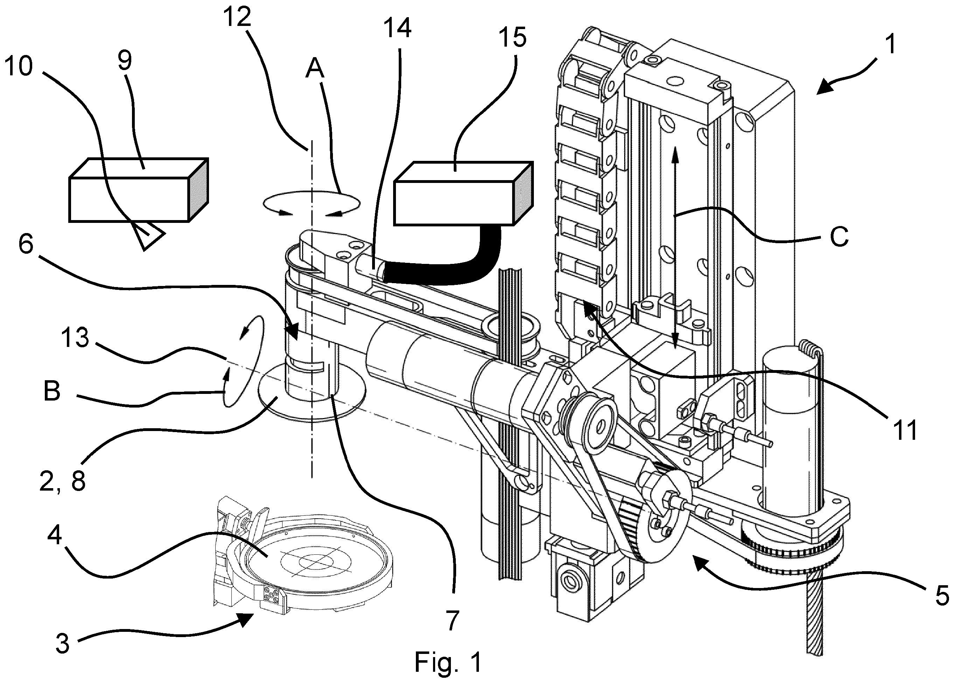

Figure 1 shows a perspective view of a positioning system 1 for handling and positioning a spectacle lens 2. The positioning system 1 comprises a transfer device 3 with a support 4 for placing the spectacle lens 2. In addition, the positioning system 1 has a handling device 5. This handling device 5, which i.a. serves to take over the spectacle lens 2 from the support 4 of the transfer device 3, comprises in the embodiment shown in Figure 1 a vacuum suction unit 6, with the aid of which negative pressure is generated in order to take up the spectacle lens 2 from the support 4. In addition, the handling device 5 includes a reference contour 7 for contacting a front surface 8 of the spectacle lens 2 to ensure that the spectacle lens 2 can assume a defined pose. The positioning system 1 further comprises a pose detection device 9, for detecting the pose, i.e. the position and/or the orientation, of the spectacle lens 2 picked up by the handling device 5, which is schematically shown as a camera 10 in the displayed embodiment. The spectacle lens 2 picked up by the handling device 5 can be aligned and positioned by a drive 11. For this purpose, the reference contour 7 can be rotated about an axis of rotation 12, as indicated by the arrow A. Furthermore, the reference contour 7 can also be pivoted about a pivot axis 13, as illustrated by the arrow B. In addition, this reference contour 7 can be adjusted axially along the arrow C, which is particularly useful for picking up the spectacle lens 2 from the support 4 of the transfer device 3. In the example shown in Figure 1, the vacuum suction unit 6 is provided with a connection nozzle 14 to which a vacuum pump 15 can be connected in order to pull the spectacle lens 2 against the reference contour 7 by means of negative pressure.

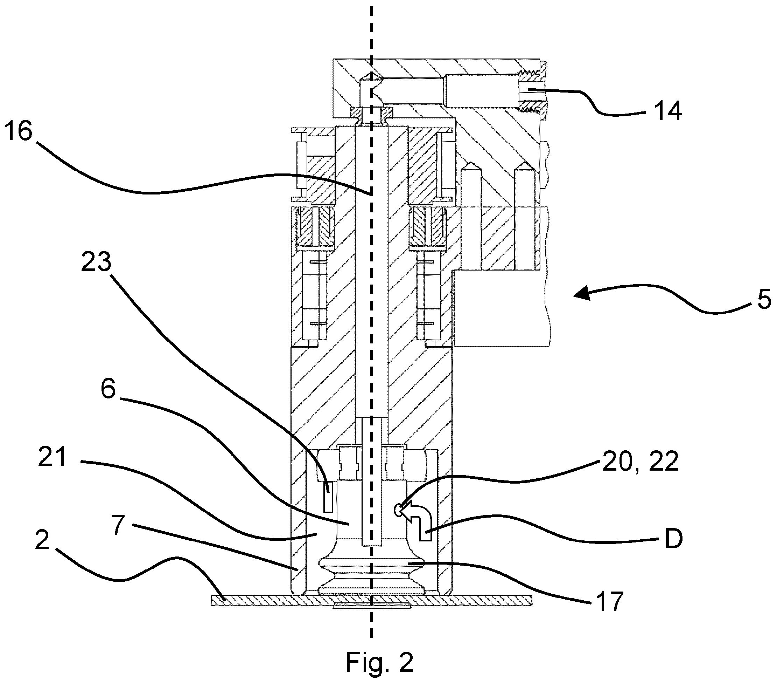

Figure 2 shows a cutaway detail view of the area of the handling device 5 in which the vacuum suction unit 6 and the reference contour 7 are arranged. As long as no vacuum is applied to the vacuum suction unit 6, the distal end of the vacuum suction unit 6 projects axially beyond the reference contour 7 with respect to its longitudinal axis 16, thus ensuring that the spectacle lens 2 to be picked up by the support 4 is contacted first by the vacuum suction unit 6. As can be further seen from the embodiment shown in Figure 2, the vacuum suction unit 6 has a bellows section 17 which contracts axially when negative pressure builds up in the vacuum suction unit 6. This then causes the spectacle lens 2 to move axially toward the reference contour 7, which serves as a stop, and ultimately comes into contact therewith. As can be seen in Figure 2, the contact area 18 of the reference contour 7 is rounded, which ensures that the contact between the spectacle lens 2 and the reference contour 7 corresponds to a line contact 19. As indicated by the arrow D in Figure 2, an air-conducting connection 20 is formed between the vacuum suction unit 6 and an intermediate region 21 limited by the reference contour 7. The air-conducting connection 20, which is formed as an opening 22 in the embodiment shown, makes it possible to also generate negative pressure in the intermediate region 21, which is detected by a pressure gauge 23 projecting into the intermediate region 21. The reference contour 7 is formed in a circular shape and the vacuum suction unit 6 is arranged substantially coaxially with the reference contour 7, wherein the diameter of the reference contour 7 in the shown embodiment is 21 mm and thus smaller than 35 mm but larger than 15 mm.

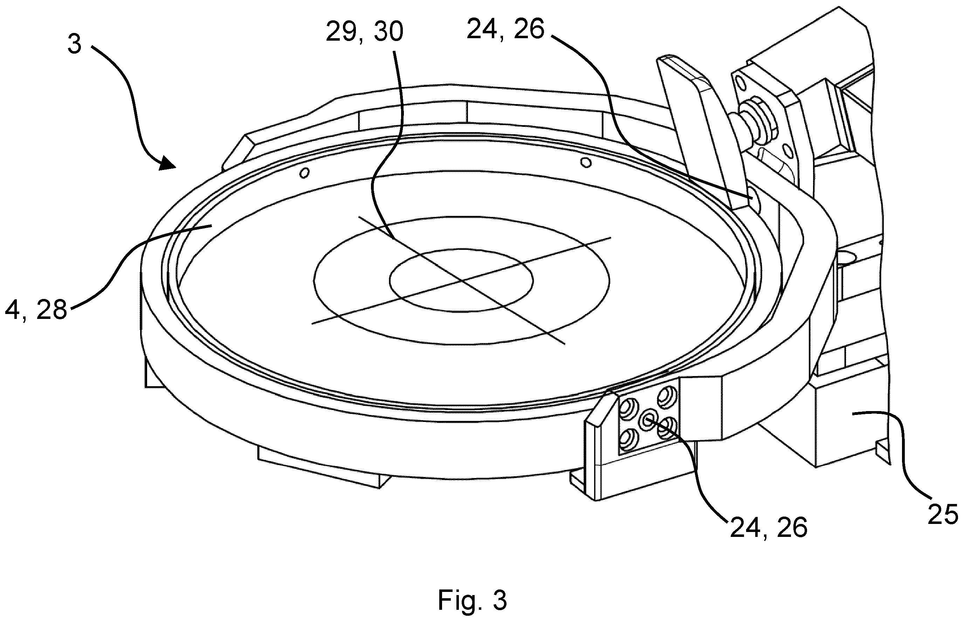

Figure 3 shows a further detailed view of the transfer device 3 of the positioning system 1. The Figure shows that the support 4 of the transfer device 3 is supported by a cardanic bearing 24 , which is mounted on a frame 25 that is only indicated in the drawing. Due to the cardanic bearing 24, which ultimately has two bearing axes 26 oriented perpendicular to each other, a spectacle lens 2 positioned on the support 4 will always rest on the support 4 in such a way that the front surface 8 has a horizontal orientation except for the convexity, regardless of the specific design of a back surface 27 of the spectacle lens 2. In this way, the spectacle lens 2 can be picked up easily and, in particular, in a defined manner by the vacuum suction unit 6 of the handling device 5. The support 4 is further formed as an elastic membrane 28 which is formed of an elastic material. If the spectacle lens 2 is not perfectly horizontal despite the cardanic bearing 24 of the support 4, the spectacle lens 2 can dip into this elastic membrane 28 to a limited extent while being contacted by the reference contour 7. As soon as the reference contour 7 contacts the spectacle lens 2, it is oriented - supported by the cardanic bearing 24 as well as by the elastic membrane 28 - so that the reference contour 7 is completely in contact with the convex front surface 8 of the spectacle lens 2. Since the spectacle lens 2 can still make slight compensating movements after being contacted by the reference contour 7 due to the cardanic bearing 24, there is a rolling movement between the front surface 8 of the spectacle lens 2 and the reference contour 7 until the spectacle lens 2 is completely in contact with the reference contour 7. This reduces the risk of the reference contour 7 slipping over the front surface 8 of the spectacle lens 2 and possibly scratching it. Figure 3 also shows that the support 4 of the transfer device 3 is provided with a centering circle 29 or a catching circle 30, by means of which the centered placement of the spectacle lens 2 on the support 4 is facilitated.

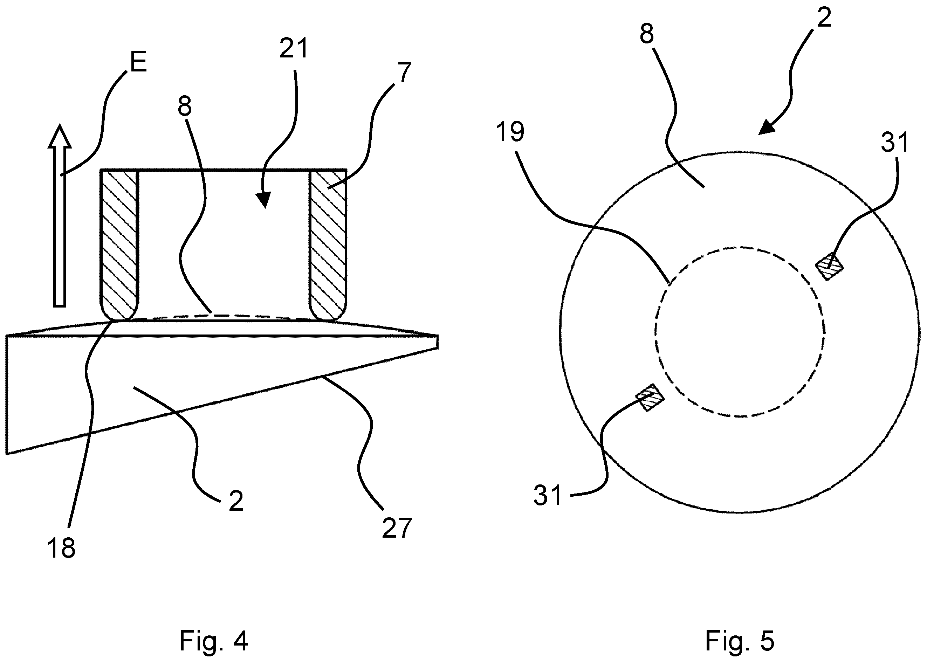

Figure 4 shows a schematic sectional view of the spectacle lens 2 contacted by the reference contour 7, the back surface 27 of which has a high prismatic content. For reasons of clarity, the vacuum suction unit 6 is not shown. The figure also shows the rounding of the contact area 18, which reduces the risk of damage to the front surface 8 of the spectacle lens 2. Figure 4 also shows once again very clearly that the spectacle lens 2 can dip with its convexly shaped front surface 8 into the intermediate region 21 limited by the reference contour 7. This makes it once again clear that it is necessary to know the dimensions and especially the diameter of the reference contour 7 in order to be able to determine the position of a specific point on the convex front surface 8 of the spectacle lens 2. As the diameter of the reference contour 7 increases, the spectacle lens 2 can move further into the intermediate region 21, so that the entire front surface 8 and the respective spectacle lens 2 move further in the direction of the arrow E shown in Figure 4.

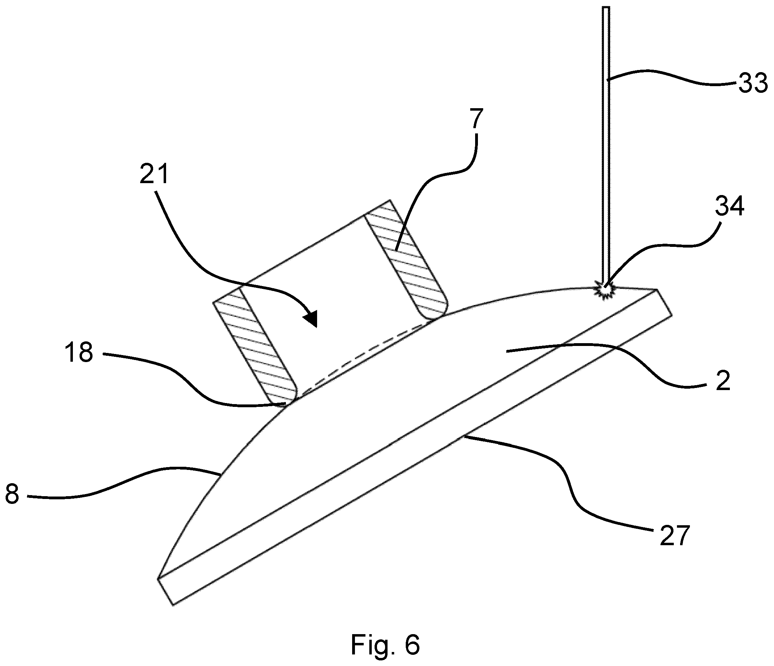

Figure 5 shows an example of a spectacle lens 2 with permanent engravings 31 applied to the front surface 8 of the spectacle lens 2, the position of which can be detected with the aid of the pose detection device 9 comprising the camera 10, thus making it possible to detect the position of the permanent engravings 31 in relation to the coordinate system of the reference contour 7 and thus to determine the actual pose of the spectacle lens 2. Figure 5 also shows - indicated by a dashed line - the line contact 19 between the spectacle lens 2 and the reference contour 7. From the diameter of this line contact 19 and with a known radius of the convex front surface 8 of the spectacle lens 2 as well as due to the detected position of the permanent engravings 31, it is now possible without tactile height sensing to orientate the position at which a laser engraving 32 is to be applied in such a way that the center of the laser engraving 32 is orthogonal to a laser beam 33 of a laser as well as in a focal point 34 of the laser beam 33, as shown in Figure 6.

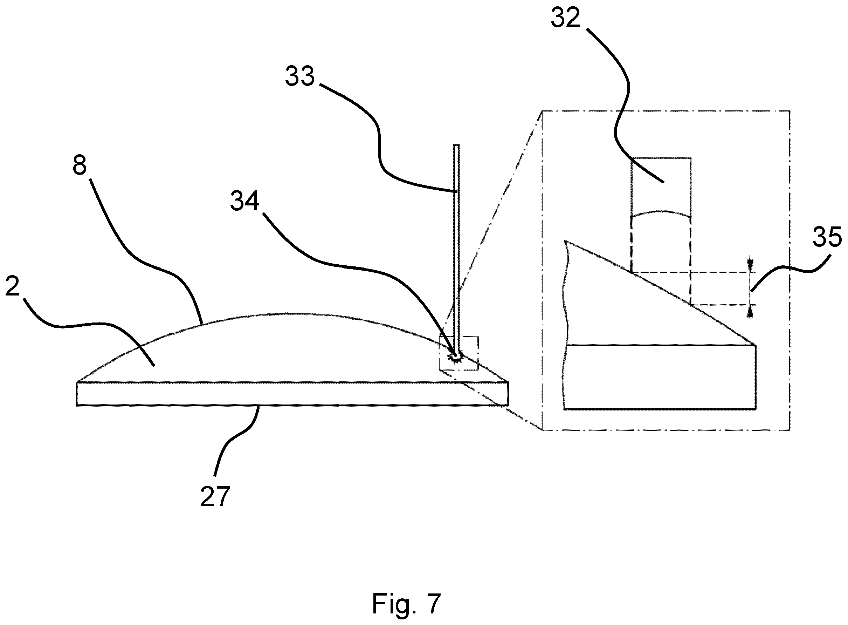

Figure 7 again clearly illustrates the problem that arises when the area of the spectacle lens 2 on which a laser engraving 32 is to be made is not aligned perpendicular to the laser beam 33 of the laser. This results in distortion, and there is also the problem that the laser must be focused over a large area, i.e. it must have a large depth of field 35, since otherwise the quality of the laser engraving 32 is adversely affected by the lack of focus.

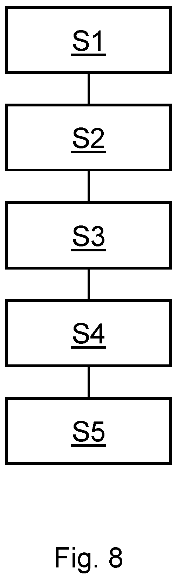

The method of handling a spectacle lens 2 according to the invention is described below on the basis of the flow chart shown in Figure 8. First, in a step S1, the spectacle lens 2 is placed on the support 4 of the transfer device 3. This can be done either manually by hand or by a suction gripper. In a further step S2, the transfer device 3 is fed to the handling device 5, for example by moving the transfer device 3 under the handling device 5 by a conveyor. Alternatively, a gripper can also be used for this purpose. When the transfer device 3 with the spectacle lens 2 is under the handling device 5, the spectacle lens 2 is picked up in step S3 by the vacuum suction unit 6 of the handling device 5 by applying negative pressure. This picking up of the spectacle lens 2 is done in such a way that the spectacle lens 2 is contacted by the reference contour 7 of the handling device 5, which provides a stop. In a step S4, the actual pose of the spectacle lens 2 is detected. For this purpose, the pose detection device 9 is used, which detects and registers the permanent engravings 31 located on or in the spectacle lens 2 and their positions. Taking into account the radius of the convex front surface 8 of the spectacle lens 2 and the diameter of the reference contour 7, it is then possible to determine the actual pose. This actual pose is then compared with a target pose in step S5, and the reference contour 7 is rotated and pivoted by means of the at least one drive 11 and, if necessary, axially adjusted until the actual pose essentially matches the nominal pose.

### List of reference signs:

- 1: positioning system
- 2: spectacle lens
- 3: transfer device
- 4: support
- 5: handling device
- 6: vacuum suction unit
- 7: reference contour
- 8: front surface
- 9: pose detection device
- 10: camera
- 11: drive
- 12: axis of rotation
- 13: pivot axis
- 14: connection nozzle
- 15: vacuum pump
- 16: longitudinal axis
- 17: bellows section
- 18: contact area
- 19: line contact
- 20: air-conducting connection
- 21: intermediate region
- 22: opening
- 23: pressure gauge
- 24: cardanic bearing
- 25: frame
- 26: bearing axis
- 27: back surface
- 28: membrane
- 29: centering circle
- 30: catching circle
- 31: permanent engraving
- 32: laser engraving
- 33: laser beam
- 34: focal point
- 35: depth of field

- A: rotational movement
- B: pivotal movement
- C: translational movement
- D: air flow
- E: arrow
- S1-S5: method steps

## Claims

1. Positioning system (1) for handling and aligning a spectacle lens (2), comprising a transfer device (3) with a support (4) for placing a spectacle lens (2) on it and a handling device (5) having a vacuum suction unit (6) for picking up a spectacle lens (2) placed on the support (4) of the transfer device (3), wherein the handling device (5) comprises a reference contour (7) for contacting a spectacle lens (2) forming a stop for a spectacle lens lifted by the handling device's (5) vacuum suction unit (6) and provides for a specific point of reference and is formed circularly, the vacuum suction unit (6) being arranged substantially coaxially to the reference contour (7).

2. Positioning system (1) according to claim 1, **characterized in that** the vacuum suction unit (6) projects axially beyond the reference contour (7) with respect to a longitudinal axis (16) of the vacuum suction unit (6).

3. Positioning system (1) according to claim 1 or 2, **characterized in that** the vacuum suction unit (6) has at least one bellows section (17).

4. Positioning system (1) according to one of the previous claims, **characterized in that** the contact area (18) of the reference contour (7) is rounded.

5. Positioning system (1) according to one of the previous claims, **characterized in that** an air-conducting connection (20) is formed between the vacuum suction unit (6) and an intermediate region (21) limited by the reference contour (7).

6. Positioning system (1) according to any one of the preceding claims, **characterized in that** a device (9) for pose detection of a spectacle lens (2) picked up by the handling device (5) is provided.

7. Positioning system (1) according to claim 5 or 6, **characterized in that** the diameter of the reference contour (7) is smaller than 35 mm and further larger than 15 mm and more preferably 21 mm.

8. Positioning system (1) according to one of the previous claims, **characterized in that** at least one drive (11) is provided for aligning and positioning the spectacle lens (2) and/or the reference contour (7).

9. Positioning system (1) according to one of the previous claims, **characterized in that** the reference contour (7) is mounted rotatably about an axis of rotation (12), is pivotable about a pivot axis (13) and/or is axially adjustable.

10. Positioning system (1) according to one of the previous claims, **characterized in that** the support (4) of the transfer device (3) is supported by a cardanic bearing (24).

11. Positioning system (1) according to claim 10, **characterized in that** the support (4) is designed as an elastic membrane (28).

12. Positioning system (1) according to claim 10 or 11, **characterized in that** a centering circle (29) and/or a catching circle (30) is provided on the support (4).

13. Method for handling a spectacle lens (2) with a positioning system (1) according to one of claims 1 to 12, comprising the steps:
- placing a spectacle lens (2) on a support (4) of a transfer device (3),
- feeding the transfer device (3) to the handling device (5), and
- picking up the spectacle lens (2) with a vacuum suction unit (6) of the handling device (5), such that the spectacle lens (2) is contacted by a reference contour (7) of the handling device (5) forming a stop for a spectacle lens lifted by the handling device's (5) vacuum suction unit (6) and provides for a specific point of reference and is formed circularly, the vacuum suction unit (6) being arranged substantially coaxially to it..

14. Method according to claim 13, **characterized in that** there are further provided the steps of:
- detecting an actual pose of the spectacle lens (2),
- determining the deviation between the actual pose and the target pose, and
- aligning and positioning the spectacle lens (2) such that the actual pose substantially matches the target pose.

## Patentansprüche

1. Positionierungssystem (1) zum Handhaben und Ausrichten eines Brillenglases (2), umfassend eine Überführungsvorrichtung (3) mit einem Träger (4) zum Platzieren eines Brillenglases (2) und eine Handhabungsvorrichtung (5) mit einer Vakuumsaugeinheit (6) zum Aufnehmen eines Brillenglases (2), das auf dem Träger (4) der Überführungsvorrichtung (3) platziert ist, wobei die Handhabungsvorrichtung (5) eine Referenzkontur (7) zum Berühren eines Brillenglases (2) aufweist, die einen Anschlag für ein Brillenglas bildet, das durch die Vakuumsaugeinheit (6) der Handhabungsvorrichtung (5) angehoben wird, und einen spezifischen Referenzpunkt bereitstellt und kreisförmig ausgebildet ist, wobei die Vakuumsaugeinheit (6) im Wesentlichen koaxial zu der Referenzkontur (7) angeordnet ist.

2. Positionierungssystem (1) nach Anspruch 1, **dadurch gekennzeichnet, dass** die Vakuumsaugeinheit (6) in Bezug auf eine Längsachse (16) der Vakuumsaugeinheit (6) axial über die Referenzkontur (7) hervorsteht.

3. Positionierungssystem (1) nach Anspruch 1 oder 2, **dadurch gekennzeichnet, dass** die Vakuumsaugeinheit (6) mindestens einen Balgabschnitt (17) aufweist.

4. Positionierungssystem (1) nach einem der vorhergehenden Ansprüche, **dadurch gekennzeichnet, dass** die Kontaktfläche (18) der Referenzkontur (7) abgerundet ist.

5. Positionierungssystem (1) nach einem der vorhergehenden Ansprüche, **dadurch gekennzeichnet, dass** zwischen der Vakuumsaugeinheit (6) und einem Zwischenbereich (21), der durch die Referenzkontur (7) begrenzt wird, eine luftleitende Verbindung (20) ausgebildet ist.

6. Positionierungssystem (1) nach einem der vorhergehenden Ansprüche, **dadurch gekennzeichnet, dass** eine Vorrichtung (9) zur Lagedetektion eines von der Handhabungsvorrichtung (5) aufgenommenen Brillenglases (2) bereitgestellt ist.

7. Positionierungssystem (1) nach Anspruch 5 oder 6, **dadurch gekennzeichnet, dass** der Durchmesser der Referenzkontur (7) kleiner als 35 mm und ferner größer als 15 mm ist und besonders bevorzugt 21 mm beträgt.

8. Positionierungssystem (1) nach einem der vorhergehenden Ansprüche, **dadurch gekennzeichnet, dass** mindestens ein Antrieb (11) zum Ausrichten und Positionieren des Brillenglases (2) und/oder der Referenzkontur (7) bereitgestellt ist.

9. Positionierungssystem (1) nach einem der vorhergehenden Ansprüche, **dadurch gekennzeichnet, dass** die Referenzkontur (7) um eine Drehachse (12) drehbar montiert, um eine Schwenkachse (13) schwenkbar und/oder axial justierbar ist.

10. Positionierungssystem (1) nach einem der vorhergehenden Ansprüche, **dadurch gekennzeichnet, dass** der Träger (4) der Überführungsvorrichtung (3) durch ein kardanisches Lager (24) getragen wird.

11. Positionierungssystem (1) nach Anspruch 10, **dadurch gekennzeichnet, dass** der Träger (4) als elastische Membran (28) ausgeführt ist.

12. Positionierungssystem (1) nach Anspruch 10 oder 11, **dadurch gekennzeichnet, dass** an dem Träger (4) ein Zentrierkreis (29) und/oder ein Fangkreis (30) bereitgestellt ist.

13. Verfahren zum Handhaben eines Brillenglases (2) mit einem Positionierungssystem (1) nach einem der Ansprüche 1 bis 12, umfassend die Schritte:
- Platzieren eines Brillenglases (2) auf einem Träger (4) einer Überführungsvorrichtung (3),
- Zuführen der Überführungsvorrichtung (3) zu der Handhabungsvorrichtung (5), und
- Aufnehmen des Brillenglases (2) mit einer Vakuumsaugeinheit (6) der Handhabungsvorrichtung (5), so dass das Brillenglas (2) von einer Referenzkontur (7) der Handhabungsvorrichtung (5) berührt wird, die einen Anschlag für ein Brillenglas bildet, das von der Vakuumsaugeinheit (6) der Handhabungsvorrichtung (5) angehoben wird, und einen spezifischen Bezugspunkt bereitstellt und kreisförmig ausgebildet ist, wobei die Vakuumsaugeinheit (6) im Wesentlichen koaxial zu ihr angeordnet ist.

14. Verfahren nach Anspruch 13, **dadurch gekennzeichnet, dass** ferner die folgenden Schritt bereitgestellt werden:
- Detektieren einer tatsächlichen Lage des Brillenglases (2),
- Bestimmen der Abweichung zwischen der tatsächlichen Lage und der Ziellage, und
- Ausrichten und Positionieren des Brillenglases (2) so, dass die tatsächliche Lage mit der Ziellage im Wesentlichen übereinstimmt.

## Revendications

1. Système de positionnement (1) destiné à la manipulation et à l'alignement d'un verre de lunettes (2), comprenant un dispositif de transfert (3) avec un support (4) pour placer un verre de lunettes (2) sur celui-ci et un dispositif de manipulation (5) avec une unité d'aspiration sous vide (6) pour saisir un verre de lunettes (2) placée sur le support (4) du dispositif de transfert (3), le dispositif de manipulation (5) comprenant un contour de référence (7) pour entrer en contact avec un verre de lunettes (2) formant une butée pour un verre de lunettes soulevé par l'unité d'aspiration sous vide (6) du dispositif de manipulation (5) et fournissant un point de référence spécifique et étant formé de manière circulaire, l'unité d'aspiration sous vide (6) étant agencée sensiblement coaxialement au contour de référence (7).

2. Système de positionnement (1) selon la revendication 1, **caractérisé en ce que** l'unité d'aspiration sous vide (6) dépasse axialement du contour de référence (7) par rapport à un axe longitudinal (16) de l'unité d'aspiration sous vide (6).

3. Système de positionnement (1) selon la revendication 1 ou 2, **caractérisé en ce que** l'unité d'aspiration sous vide (6) a au moins une section de soufflet (17).

4. Système de positionnement (1) selon l'une des revendications précédentes, **caractérisé en ce que** la surface de contact (18) du contour de référence (7) est arrondie.

5. Système de positionnement (1) selon l'une des revendications précédentes, **caractérisé en ce qu'**une liaison conductrice d'air (20) est formée entre l'unité d'aspiration sous vide (6) et une zone intermédiaire (21) limitée par le contour de référence (7).

6. Système de positionnement (1) selon l'une quelconque des revendications précédentes, **caractérisé en ce qu'**il est prévu un dispositif (9) de détection de position d'un verre de lunettes (2) saisi par le dispositif de manipulation (5).

7. Système de positionnement (1) selon la revendication 5 ou 6, **caractérisé en ce que** le diamètre du contour de référence (7) est inférieur à 35 mm et en outre supérieur à 15 mm et de préférence encore 21 mm.

8. Système de positionnement (1) selon l'une des revendications précédentes, **caractérisé en ce qu** il est prévu au moins un entraînement (11) pour aligner et positionner le verre de lunettes (2) et/ou le contour de référence (7).

9. Système de positionnement (1) selon l'une des revendications précédentes, **caractérisé en ce que** le contour de référence (7) est monté rotatif autour d'un axe de rotation (12), peut pivoter autour d'un axe de pivotement (13) et/ou est réglable axialement.

10. Système de positionnement (1) selon l'une des revendications précédentes, **caractérisé en ce que** le support (4) du dispositif de transfert (3) est supporté par un palier à cardan (24).

11. Système de positionnement (1) selon la revendication 10, **caractérisé en ce que** le support (4) est réalisé sous la forme d'une membrane élastique (28).

12. Système de positionnement (1) selon la revendication 10 ou 11, **caractérisé en ce qu'** un cercle de centrage (29) et/ou un cercle d'arrêt (30) est prévu sur le support (4).

13. Procédé de manipulation d'un verre de lunettes (2) avec un système de positionnement (1) selon l'une des revendications 1 à 12, comportant les étapes de :
- placement d'un verre de lunettes (2) sur un support (4) d'un dispositif de transfert (3),
- alimentation du dispositif de transfert (3) au dispositif de manipulation (5), et
- saisie du verre de lunettes (2) avec une unité d'aspiration sous vide (6) du dispositif de manipulation (5), de telle sorte que le verre de lunettes (2) soit contacté par un contour de référence (7) du dispositif de manipulation (5) formant butée pour un verre de lunettes soulevé par l'unité d'aspiration sous vide (6) du dispositif de manipulation (5) et fournissant un point de référence spécifique, et qu'il soit formé circulairement, l'unité d'aspiration sous vide (6) étant disposée sensiblement coaxialement à celui-ci.

14. Procédé selon la revendication 13, **caractérisé en ce qu'**il comprend en outre les étapes de :
- détection d'une pose réelle du verre de lunettes (2),
- détermination de l'écart entre la pose réelle et la pose cible, et
- alignement et positionnement du verre de lunettes (2) de telle façon que la pose réelle soit sensiblement conforme à la pose cible.
